## Europäisches Patentamt

## European Patent Office

## Office européen des brevets

(11) Veröffentlichungsnummer: **0 229 900**
**B1**

(12) **EUROPÄISCHE PATENTSCHRIFT**

(45) Veröffentlichungstag der Patentschrift:
**19.12.90**

(51) Int. Cl.⁵: **F16H 47/06, F16H 61/12**

(21) Anmeldenummer: **86115080.3**

(22) Anmeldetag: **30.10.86**

(54) **Steuerventilsystem für ein stufenlos regelbares Kegelscheiben-Umschlingungsgetriebe, insbesondere für Kraftfahrzeuge.**

(30) Priorität: **24.01.86 DE 3602137**

(43) Veröffentlichungstag der Anmeldung:
**29.07.87 Patentblatt 87/31**

(45) Bekanntmachung des Hinweises auf die Patenterteilung:
**19.12.90 Patentblatt 90/51**

(84) Benannte Vertragsstaaten:
**BE DE FR GB IT NL SE**

(56) Entgegenhaltungen:
EP-A- 0 061 732
EP-A- 0 128 469
DE-A- 3 310 786
DE-A- 3 439 882
US-A- 4 559 850

(73) Patentinhaber: **FORD-WERKE AKTIENGESELLSCHAFT,
Werk Köln-Niehl Henry-Ford-Strasse Postfach 60 40 02,
D-5000 Köln 60(DE)**

(84) Benannte Vertragsstaaten: **BE DE IT NL SE**

(73) Patentinhaber: **FORD MOTOR COMPANY LIMITED,
Eagle Way, Brentwood Essex CM13 3BW(GB)**

(84) Benannte Vertragsstaaten: **GB**

(73) Patentinhaber: **FORD FRANCE SOCIETE ANONYME,
344 Avenue Napoléon Bonaparte B.P. 307, F-92506 Rueil
Malmaison Cedex(FR)**

(84) Benannte Vertragsstaaten: **FR**

(72) Erfinder: **Eggert, Ulrich, Dürener Strasse 54,
D-5000 Köln 41(DE)**
Erfinder: **Staffel, Hermann, In der Auen 123,
D-5060 Bergisch-Gladbach 1(DE)**

(74) Vertreter: **Messulam, Alec Moses et al, A. Messulam &
Co. 24 Broadway, Leigh on Sea Essex SS9 1BN(GB)**

ACTORUM AG

## Beschreibung

Die Erfindung bezieht sich auf ein Steuerventilsystem für ein stufenlos regelbares Kegelscheiben-Umschlingungsgetriebe, insbesondere für Kraftfahrzeuge der im Oberbegriff des Patentanspruchs 1 erläuterten Art.

Aus der DE-A 33 10 786 ist ein Steuerventilsystem dieser Art bekannt.

Bei diesem bekannten Steuerventilsystem für ein stufenlos regelbares Kegelscheiben-Umschlingungsgetriebe, dessen Primärwelle unmittelbar von einer Brennkraftmaschine über einen Drehmomentfühler angetrieben wird und bei dem eine Druckmittelpumpe vorgesehen ist, werden die jedem Kegelscheibenpaar zugeordneten Verstellzylinder über entsprechende Steuerventile wechselweise beaufschlagt und entlastet, wobei die von einer Drehmomentanforderung und von der Fahrgeschwindigkeit bestimmten Steuersignale von einer elektronischen Steuereinheit in elektrischer Form bereitgestellt werden und unmittelbar auf die als Solenoid-Ventile ausgebildeten Haupt-Steuerventile des Steuerventilsystems einwirken.

Das bekannte Steuerventilsystem weist hierbei keine Sicherheitsvorkehrung auf, die bei Ausfall der elektronischen Steuereinheit zumindest einen eingeschränkten Notbetrieb des Kegelscheiben-Umschlingungsgetriebes ermöglicht, um das Kraftfahrzeug zur nächstgelegenen Werkstätte zu bringen.

Die Aufgabe der Erfindung ist es, ein Steuerventilsystem der im Oberbegriff des Patentanspruchs 1 erläuterten Art derart zu verbessern, daß es einerseits in Verbindung mit einem die Anfahreinheit des Getriebes bildenden hydrokinetischen Drehmomentwandler verwendet werden kann und daß es andererseits bei einem Ausfall der elektronischen Steuereinheit einen eingeschränkten Notbetrieb ermöglicht, mit dem das Fahrzeug zur nächstgelegenen Werkstatt gebracht werden kann.

Gemäß der Erfindung wird diese Aufgabe gelöst, indem ein Steuerventilsystem gemäß dem Oberbegriff des Patentanspruchs 1 die im Kennzeichenteil des Patentanspruchs 1 aufgezeigten Maßnahmen aufweist.

In den Patentansprüchen 2 und 3 sind weitere zweckmässige Sicherheitsvorkehrungen für das erfindungsgemäße Steuerventilsystem erläutert.

Dadurch, daß die Brennkraftmaschine eine zweite Druckmittelpumpe und über einen hydrokinetischen Drehmomentwandler die Primärwelle antreibt und die Pumpe über ein Begrenzungsventil und ein Bypaßventil mit dem Hauptdruck-Regulierventil verbunden ist und den Drehmomentwandler über ein Drehmomentwandler-Entlastungsventil versorgt und wobei das Übersetzungs-Steuerventil von einem Übersetzungs-Steuerdruck-Solenoidventil mit einem Übersetzungs-Steuerdruck angesteuert wird, das bei Normalfunktion Steuerdrücke zwischen 2 und 4 bar zur Übersetzungsregelung und einen Steuerdruck von 6 bar zur Stillstandsverstellung bereitstellt und wobei das Drehmomentwandler-Entlastungsventil bei Ausfall der elektrischen Steuereinheit und Absinken der Drehzahl der Brennkraftmaschine unter 1200 Umdrehungen pro Minute als ein Notbetrieb-Schaltventil wirksam wird und den Drehmomentwandler-Ablaufdruck über ein weiteres Notbetrieb-Schaltventil als Ersatzsteuerdruck zum Übersetzungs-Steuerventil weiterleitet, wird nicht nur die einwandfreie Versorgung des hydrokinetischen Drehmomentwandlers mit Druckmittel sichergestellt sondern auch für den besonderen Fall der Stillstandsverstellung zusätzliches Druckmittel für den Sekundär-Verstellzylinder des Kegelscheiben-Umschlingungsgetriebes zur Verfügung gestellt und darüberhinaus wird bei Ausfall der elektronischen Steuerung durch den entsprechend weitergeleiteten Drehmomentwandler-Ablaufdruck ein Notbetrieb des Kraftfahrzeuges ermöglicht.

Dadurch, daß der vom ersten Notbetrieb-Schaltventil erzeugte Ersatz-Steuerdruck auf ein Rückwärtsgang-Sperrventil einwirkt, wird ein Einschalten des Rückwärtsganges bei Fahrgeschwindigkeiten über 15 km/h verhindert, wobei bei bereits eingelegtem Rückwärtsgang durch Rückkoppelung ein Selbsthalteeffekt bewirkt wird. Durch ein Einwirken des Übersetzungs-Steuerdruckes auf das Rückwärtsgang-Sperrventil wird sichergestellt, daß der Rückwärtsgang auch bei überhöhtem Kaltleerlauf im Stand eingerückt werden kann.

Dadurch, daß bei einer Stellung des Handwählventiles in den Stellungen P, R und N ein Übersetzungs-Sperrventil den Drehmomentwandler-Ablaufdruck auf das Übersetzungs-Steuerventil einwirken läßt, wird der Übersetzungs-Steuerdruck vom Übersetzungs-Steuerdruck-Soleonidventil übersteuert, um das Getriebe in der niedrigen Übersetzung zu halten.

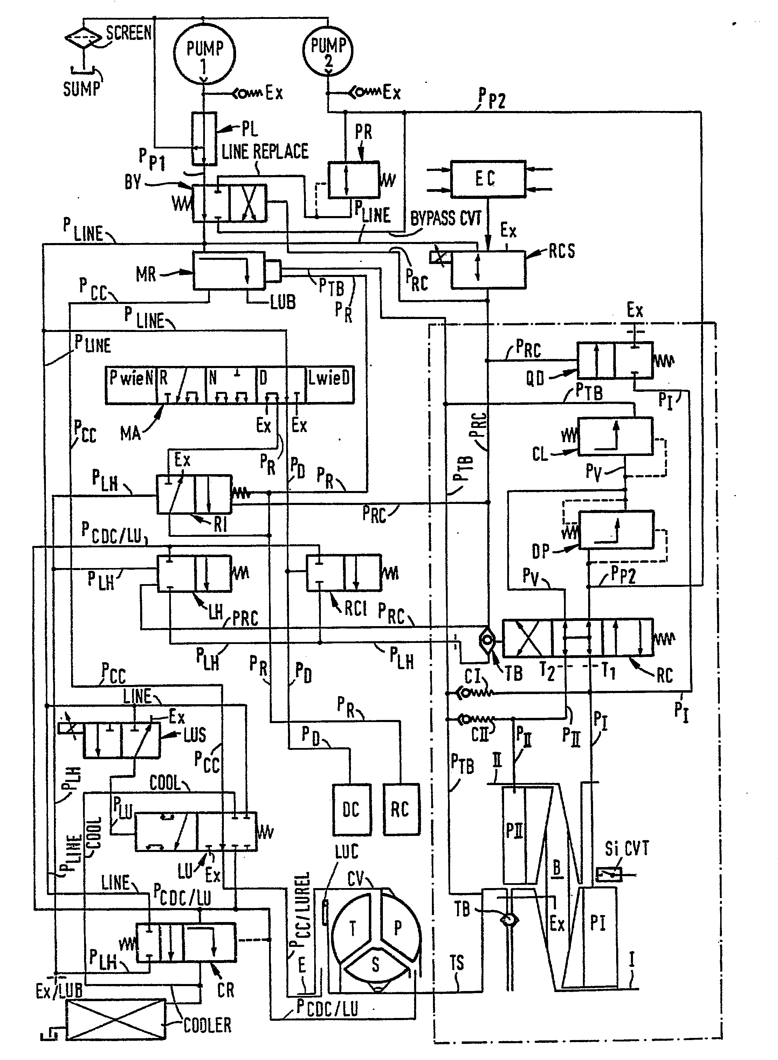

Die Erfindung wird anhand eines in der Zeichnung gezeigten schematischen Darstellung des erfindungsgemäßen Steuerventilsystems näher erläutert.

Es zeigt:
die Figur eine schematische Darstellung eines erfindungsgemäßen Steuerventilsystems in Verbindung mit den für das Gesamtgetriebe erforderlichen schematisch dargestellten Baugruppen.

Wie aus der Figur rechts unten zu ersehen ist, besteht das Gesamtgetriebe aus einer von einer Brennkaftmaschine getriebenen Eingangswelle E, die einen hydrokinetischen Drehmomentwandler CV antreibt, der in üblicher Weise einen Pumpenteil P, einen Statorteil S und einen Turbinenteil T aufweist. Die Turbinenwelle TS des Drehmomentwandlers CV treibt hierbei über einen Drehmomentfühler TB die Primärwelle I eines Kegelscheiben-Umschlingungsgetriebes an, deren Kegelscheibenpaar mit einem primären Verstellzylinder PI versehen ist und über ein Zugorgan B die Sekundärwelle II des Kegelscheiben-Umschlingungsgetriebes antreibt, deren Kegelscheibenpaar einen sekundären Verstellzylinder PII aufweist.

Die wechselweise Beaufschlagung der Verstellzylinder PI und PII erfolgt über eine Übersetzungs-Steuerventil RC, das über eine Pumpe 2 mit Druckmittel von einem Druck $P_{P2}$ versorgt wird und auf das ein von einem CVT-Leitungsdruckventil CL erstellter CVT-Leitungsdruck $P_V$ einwirkt, wobei

ein Differenzdruckventil DP die Differenz zwischen dem Pumpendruck $P_{P2}$ und dem Leitungsdruck $P_V$ überwacht.

Auf das Übersetzungs-Steuerventil RC wirkt weiterhin ein von einem Übersetzungs-Steuerdruck-Solenoidventil RCS erstellter Übersetzungs-Steuerdruck $P_{RC}$ ein, wobei das Übersetzungs-Steuer-Solenoidventil RCS unmittelbar von einer elektronischen Steuereinheit EC angesteuert wird, die über entsprechende Fühler eingegebene Daten über die Brennkraftmaschine und das Kraftfahrzeug, wie zum Beispiel eine Drehmomentanforderung und die Fahrgeschwindigkeit verarbeitet und in entsprechende elektrische Steuersignale umsetzt.

Das Übersetzungs-Steuerventil RC beaufschlagt und entlastet die entsprechenden Verstellzylinder PI und PII mit entsprechenden Drücken $P_I$ und $P_{II}$, wobei das Abströmen des jeweils entlasteten Verstellzylinders durch in den Abströmleitungen angeordnete Drosselventile CI und CII beeinflußt wird.

Ein von einem Drehmomentfühler TB erzeugter Drehmoment-Steuerdruck $P_{TB}$ wirkt auf das CVT-Leitungsdruckventil CL sowie auf das Hauptdruck-Regulierventil MR ein.

Der bisher beschriebene Teil des Steuerventilsystems entspricht im Wesentlichen dem unmittelbar für die Steuerung des Kegelscheiben-Umschlingungsgetriebes erforderlichen Teil eines Steuerventilssystems, wie es etwa aus der zum Stand der Technik genannten Patentanmeldung zu entnehmen ist.

Im Nachfolgenden wird nunmehr derjenige Teil des Steuerventilsystems erläutert, der für die Steuerung des Gesamtgetriebes erforderlich ist und bei dem neben einer Anzahl von an sich bekannten Steuerventilen, wie einem Hauptdruck-Regulierventil MR und einem Handwählventil MA gemäß der Erfindung noch neue bzw. in ihrer Funktion erweiterte Steuerventile vorgesehen sind, die einerseits eine Verbesserung der Versorgung der Gesamtgetriebes mit Druckmittel und andererseits die Bereitstellung einer Notbetriebsfunktion gewährleisten sollen.

Zu diesem Zweck wird von der Brennkraftmaschine eine weitere Druckmittelpumpe 1 angetrieben, die über ein Begrenzungsventil PL Druckmittel mit einem Druck $P_{PI}$ zu einem Bypaßventil BY führt, das mit der Druckmittelpumpe 2 über ein Druckreduzierventil PR in Verbindung steht und über den Übersetzungs-Steuerdruck $P_{RC}$ derart angesteuert wird, das es bei erhöhtem Druckmittelbedarf über eine Leitung BYPASS CVT zusätzliches Druckmittel zu den Verstellzylindern des Kegelscheiben-Umschlingungsgetriebes liefert.

Die Druckmittelpumpe 1 versorgt weiterhin ein Hauptdruck-Regulierventil MR, das beeinflußt von dem Drehmoment-Steuerdruck $P_{TB}$ einen Leitungsdruck LINE sowie einen Drehmomentwandler-Zulaufdruck $P_{CC}$ erstellt.

Mit diesem Leitungsdruck $P_{LINE}$ wird ein an sich bekanntes Handwählventil MA versorgt, das verschiedene Betriebsstellungen, wie P, R, N, D und L einnehmen kann. Entsprechend der jeweiligen Betriebsstellung wird der Leitungsdruck $P_{LINE}$ als Vorwärtsgangdruck $P_D$ oder Rückwärtsgangdruck $P_R$ den entsprechenden Vorwärts- bzw. Rückwärtsgangkupplungen DC und RC zugeleitet.

Der Drehmomentwandler-Zulaufdruck $P_{CC}$ wird dem Drehmomentwandler CV über eine Steuerventilanordnung zugeleitet, die aus einem Überbrückungs-Solenoidventil LUS und einem Überbrückungs-Schaltventil LU besteht. Das Überbrückungs-Solenoidventil LUS wird wieder unmittelbar von der elektronischen Steuereinheit EC angesteuert.

Die elektronische Steuereinheit EC steuert ein Übersetzungs-Steuerdruck-Solenoidventil RCS an, das Übersetzungs-Steuerdrücke $P_{RC}$ erzeugt, die gegenüber der unmittelbaren elektromagnetischen Beeinflußung des Übersetzungs-Steuerventiles RC den Vorteil haben, daß die von diesem Ventil zur Verfügung gestellten Übersetzungs-Steuerdrücke $P_{RC}$ sowohl zur Beeinflußung des Schnell-Abwärtsschaltventiles QD sowie für weitere Steuerventile Verwendung finden kann.

Das Übersetzungs-Steuerdruck-Solenoidventil RCS stellt hierbei im normalen Arbeitsbereich einen Steuerdruck zwischen 2 und 4 bar zur Verfügung. Bei einem Steuerdruck von 2 bar erfolgt eine schnelle Verstellung zur höheren Übersetzung, bei einem Steuerdruck von 4 bar erfolgt eine schnelle Verstellung zur niedrigeren Übersetzung. Bei einem Steuerdruck von etwa 3 bar erfolgt keine Übersetzungsänderung.

Bei der nachfolgend einer abrupten Notbremsung eines Kraftfahrzeuges erwünschten Stillstandsverstellung des stufenlos regelbaren Kegelscheiben-Umschlingungsgetriebes, bei der von der vorher eingenommenen höheren Übersetzung zu der für ein erneutes Anfahren erforderlichen niedrigeren Übersetzung verstellt werden muß, wird ein Steuerdruck von 6 bar zur Verfügung gestellt, wodurch über das Übersetzungs-Steuerventil RC eine schnelle Verstellung zur niedrigeren Übersetzung bewirkt wird, weiterhin wird das Schnell-Abwärtsschaltventil QD und das Bypaßventil BY aktiviert, wodurch für das rasche Auffüllen des Verstellzylinders PI an der Primärwelle eine erhöhte Druckmittelmenge zur Verfügung gestellt wird. Die elektronische Steuereinheit EC erkennt hierbei die Notwendigkeit einer Stillstandsverstellung durch einen Drosselklappenwinkel gleich Null plus einer Fahrgeschwindigkeit von etwa Null, einer Motordrehzahl kleiner als 1000 U/min. und einer Übersetzung $i_{CVT}$ ungleich der niedrigeren Übersetzung.

Die Abschaltung der Stillstandsverstellung erfolgt bei Erreichen der niedrigsten Übersetzung durch einen Schalter SiCVT, der die niedrigste Übersetzung anzeigt bzw. durch eine Änderung des Drosselklappenwinkels oder der Fahrgeschwindigkeit.

Während eines Anfahrbetriebes wird der Drehmomentwandler CV mit einem Wandlerzulaufdruck $P_{CC}$ versorgt, der für eine Durchströmung des Drehmomentwandlers CV in einer Richtung sorgt, wodurch die im Drehmomentwandler vorgesehene Überbrückungskupplung LUC ausgerückt wird. Der aus dem Drehmomentwandler abströmende Wandler-Ablaufdruck $P_{CDC}$ wird hierbei über ein Drehmomentwandler-Entlastungsventil CR zu einem Kühler geführt.

Soll die Überbrückungskupplung LUC des Drehmomentwandlers CV eingerückt werden, so wird über das Überbrückungs-Solenoidventil LUS und das Überbrückungs-Schaltventil LU ein Wandler-Überbrückungsdruck $P_{LU}$ von der Ablaufseite her in den Drehmomentwandler geführt, wodurch die Überbrückungskupplung LUC infolge der umgekehrten Strömungsrichtung anlegt.

Das auf der Ablaufseite des Drehmomentwandlers CV angeordnete Drehmomentwandler-Entlastungsventil CR sorgt hierbei dafür, daß bei geringer Druckmittelzufuhr zunächst der Drehmomentwandler vollständig gefüllt wird und stellt bei gefülltem Drehmomentwandler sicher, daß eine ständige Durchströmung des Drehmomentwandlers erfolgt, ohne daß hierbei der Betriebsdruck des Drehmomentwandlers überstiegen wird.

Das Drehmomentwandler-Entlastungsventil CR ist daher als Strömungsmengenventil ausgelegt, das oberhalb einer bestimmten Strömungsmenge, wie sie zum Beispiel bei einer Drehzahl der Brennkraftmaschine über 1200 Umdrehungen pro Minute auftritt, umschaltet.

Gemäß der Erfindung wirkt dieses Drehmomentwandler-Entlastungsventil CR weiterhin als ein erstes Notbetrieb-Schaltventil, das den Leitungsdruck LINE als Notbetrieb-Steuerdruck $P_{LH}$ zu einem weiteren Notbetrieb- Schaltventil LH durchschaltet, auf das einerseits der Drehmomentwandler-Ablaufdruck $P_{CDC}$ und andererseits der Übersetzungs-Steuerdruck $P_{RC}$ einwirkt. Der Wandlerablaufdruck $P_{CDC}$ wirkt weiterhin auf ein Übersetzungs-Sperrventil RCI ein, auf das auch der Steuerdruck $P_D$ zur Vorwärtsgangkupplung DC einwirkt, wodurch ein Weiterleiten des Wandlerablaufdruckes $P_{CDC}$ in den Stellungen des Handwählventils D und L unterbunden wird, wohingegen in den Stellungen P, R und N der Wandlerablaufdruck $P_{CDC}$ über die Leitung des Notbetrieb-Steuerdruckes $P_{LH}$ auf das Übersetzungs-Steuerventil RC einwirkt, um die Übersetzung im niedrigen Bereich festzuhalten.

Der vom Drehmomentwandler-Entlastungsventil CR oberhalb von 1200 Umdrehungen pro Minute freigegebene Notbetrieb-Steuerdruck $P_{LH}$ wird weiterhin einem Rückwärtsgang-Sperrventil RI zugeleitet, das einerseits vom Steuerdruck für den Rückwärtsgang R und vom Übersetzungs-Steuerdruck $P_{RC}$ beeinflußt wird. Durch den einwirkenden Notbetrieb-Steuerdruck $P_{LH}$ wird hierbei ein Einschalten des Rückwärtsganges über die Rückwärtsgangkupplung RC bei einer Fahrgeschwindigkeit über 15 km/h verhindert, wobei bei bereits eingelegtem Rückwärtsgang durch Rückkoppelung ein Selbsthalteeffekt bewirkt wird. Durch ein Einwirken des Übersetzungs-Steuerdruckes $P_{RC}$ auf das Rückwärtsgang-Sperrventil wird sichergestellt, daß der Rückwärtsgang auch bei überhöhtem Kaltleerlauf im Stand eingerückt werden kann.

Der durch das zweite Notbetrieb-Schaltventil LH erfolgende Ersatz des wegfallenden Übersetzungs-Steuerdruckes $P_{RC}$ durch den Notbetrieb-Steuerdruck $P_{LH}$, der dem Wandler-Ablaufdruck $P_{CDC}$ entspricht, wird erreicht, daß zum Beispiel bei Stromausfall und damit Ausfall der gesamten elektronischen Steuereinheit EC eine Verstellung des stufenlos regelbaren Kegelscheiben-Umschlingungsgetriebes zum niedrigeren Übersetzungsverhältnis erreicht und damit ein Anfahren des Kraftfahrzeuges ermöglicht wird.

Steigt die Drehzahl der Brennkraftmaschine bei angefahrenem Kraftfahrzeuge wieder über 1200 Umdrehungen pro Minute an, so schaltet das Drehmomentwandler-Entlastungsventil CR den Systemdruck $P_{LINE}$ als Notbetrieb-Steuerdruck $P_{LH}$ durch und das stufenlos regelbare Kegelscheiben-Umschlingungsgetriebe regelt wieder zur höheren Übersetzung hin. Die Regelgeschwindigkeit kann hierbei durch eine bestimmte Leckage innerhalb des Übersetzungs-Steuerventiles RC bestimmt werden.

Durch die in dem dem Gesamtgetriebe zuzurechenden Teil des Steuerventilsystems für ein stufenlos regelbares Kegelscheiben-Umschlingungsgetriebe für Kraftfahrzeuge vorgesehenen zum Teil modifizierten und zum Teil neuen Steuerventile wird die Wandlerversorgung, eine verbesserte Stillstandsverstellung und ein zufriedenstellender Notbetrieb des Gesamtgetriebes sichergestellt.

## Patentansprüche

1. Steuerventilsystem für ein stufenlos-regelbares Kegelscheiben-Umschlingungsgetriebe, insbesondere für Kraftfahrzeuge, bei dem eine Brennkraftmaschine (E) über einen Drehmomentfühler (TB) die Primärwelle (1) des Umschlingungsgetriebes und zumindest eine Druckmittelpumpe (2) antreibt und bei dem jedes Kegelscheibenpaar einen Verstellzylinder (PI, PII) aufweist, der von einem Hauptdruck-Regulierventil (MR) in Abhängigkeit von der Stellung eines Handwählventiles (MA) und in Abhängigkeit von einer Drehmomentanforderung und der Fahrgeschwindigkeit über ein Übersetzungs-Steuerventil (RC) wechselweise beaufschlagt und entlastet wird, um eine Übersetzungsänderung zu bewirken und wobei die auf das Übersetzungs-Steuerventil (RC) einwirkenden Steuersignale von einer elektronischen Steuereinheit (EC) über entsprechende Solenoidventile (RCS) bereitgestellt werden und wobei für das Umschlingungsgetriebe ein Druckdifferenz-Steuerventil (DP), ein Leitungsdruck-Regulierventil (CL), ein Drehmomentfühler-Steuerventil (TB), ein Schnell-Abwärtsschaltventil (QD) und zwei den Abfluß aus den Stellzylindern bestimmende Drosselventile (CI, CII) vorgesehen sind, dadurch gekennzeichnet, daß die Brennkraftmaschine (E) eine zweite Druckmittelpumpe (1) und über einen hydrokinetischen Drehmomentwandler (CV) die Primärwelle (I) antreibt und die Pumpe (1) über ein Strom-Begrenzungsventil (PL) und ein Bypaßventil (BY) mit dem Hauptdruck-Regulierventil (MR) verbunden ist und den Drehmomentwandler (CV) über ein Drehmomentwandler-Entlastungsventil (CR) versorgt und wobei das Übersetzungs-Steuerventil (RC) von einem Übersetzungs-Steuerdruck-Solenoidventil (RCS) mit einem Übersetzungs-Steuerdruck (P$_{RC}$) angesteuert wird, das bei Normalfunktion Steuerdrücke zwischen 2 und 4 bar zur Übersetzungsregelung und einen Steuerdruck von 6 bar zur Stillstandsverstellung bereitstellt und wobei das Drehmomentwandler-Entlastungsventil (CR) bei Ausfall der elektronischen Steuereinheit (EC) und Absinken der Drehzahl der Brennkraftmaschine unter 1200 Umdrehungen pro Minute als ein erstes Notbetrieb-Schaltventil wirksam wird und den Drehmomentwandler-Ablaufdruck (P$_{CDC}$) über ein weiteres Notbetrieb-Schaltventil (LH) als Notbetrieb-Steuerdruck (P$_{LH}$) zum Übersetzungs-Steuerventil (RC) weiterleitet.

2. Steuerventilsystem nach Anspruch 1, dadurch gekennzeichnet, daß der vom als ersten Notbetrieb-Schaltventil wirkenden Drehmomentwandler-Entlastungsventil (CR) erzeugte Notbetrieb-Steuerdruck (P$_{LH}$) auf ein Rückwärtsgang-Sperrventil (RI) einwirkt und dadurch ein Einschalten des Rückwärtsganges bei einer Motordrehzahl über 1200 U/min entsprechend einer Fahrgeschwindigkeit über 15 km/h verhindert, bei bereits eingelegtem Rückwärtsgang durch Rückkoppelung einen Selbsthalteeffekt bewirkt und bei überhöhtem Kaltleerlauf durch Einwirken des Übersetzungs-Steuerdruckes (P$_{RC}$) ein Einrücken des Rückwärtsganges im Stand auch bei höherer Motordrehzahl ermöglicht.

3. Steuerventilsystem nach den Ansprüchen 1 und 2, dadurch gekennzeichnet, daß bei einer Stellung des Handwählventiles (MA) in den Stellungen P, R und N ein Übersetzungs-Sperrventil (RCI) den Drehmomentwandler-Ablaufdruck (P$_{CDC}$) auf das Übersetzungs-Steuerventil (RC) einwirken läßt, wodurch dieses den Übersetzungs-Steuerdruck (P$_{RC}$) übersteuert und das Getriebe in der niedrigsten Übersetzung festhält.

**Claims**

1. A control valve system for a continuously variable cone pulley belt-drive transmission, in particular for motor vehicles, in which an internal combustion engine (E) drives the primary shaft (1) of the belt-drive transmission and at least one pressure fluid pump (2) by way of a torque sensor (TB) and in which each pair of cone pulleys comprises a displacement cylinder (PI, PII) which is alternately stressed and released by a main pressure regulating valve (MR) as a function of the setting of a manual selector valve (MA) and as a function of a torque requirement and the travelling velocity by way of a transmission ratio control valve (RC), in order to effect a change in the transmission ratio, the control signals acting upon the transmission ratio control valve (RC) being produced by an electronic control unit (EC) by way of corresponding solenoid valves (RCS), and a pressure difference control valve (DP), a line pressure regulating valve (CL), a torque sensor control valve (TB), a rapid shift-down valve (QD) and two throttle valves (CI,

CII) which determine the outflow from the displacement cylinders being provided for the belt-drive transmission, characterized in that the internal combustion engine (E) drives a second pressure fluid pump (1) and, by way of a hydrokinetic torque converter (CV), the primary shaft (I) and the pump (1) is connected by way of a flow-limiting valve (PL) and a bypass valve (BY) to the main pressure regulating valve (MR) and supplies the torque converter (CV) by way of a torque converter relief valve (CR), the transmission ratio control valve (RC) being actuated by a transmission-ratio control pressure solenoid valve (RCS) with a transmission ratio control pressure (PRC) which during normal operation produces control pressures of between 2 and 4 bar for regulating the transmission ratio and a control pressure of 6 bar for stoppage displacement, the torque converter relief valve (CR) coming into operation in the event of failure of the electronic control unit (EC) and a fall in the speed of the internal combustion engine to below 1200 revolutions per minute as a first emergency operation on-off valve and transmits the torque converter discharge pressure (P$_{CDC}$) by way of a further emergency operation on-off valve (LH) as an emergency operation control pressure (P$_{LH}$) to the transmission ratio control valve (RC).

2. A control valve system according to Claim 1, characterized in that the emergency operation control pressure (P$_{LH}$) produced by the torque converter relief valve (CR) acting as the first emergency operation on-off valve acts upon a reverse gear non-return valve (RI) and thus prevents an engagement of the reverse gear at an engine speed above 1200 r.p.m. corresponding to a travelling speed of above 15 km/h, produces a self-holding effect with the reverse gear already engaged by reverse engagement and when cold idling is exceeded by acting upon the transmission ratio control pressure (P$_{RC}$) allows an engagement of the reverse gear while standing even at a high engine speed.

3. A control valve system according to Claims 1 and 2, characterized in that at a setting of the manual selector valve (MA) in the positions P, R and N a transmission ratio non-return valve (RCI) allows the torque converter discharge pressure (P$_{CDC}$) to act upon the transmission ratio control valve (RC), as a result of which the latter overrides the transmission ratio control pressure (P$_{RC}$) and keeps the gear system in the lowest transmission ratio.

**Revendications**

1. Système à valves de commande pour une transmission par disques coniques à enlacement réglable en continu, notamment pour véhicules automobiles, dans lequel un moteur à combustion interne (E) entraîne, par l'intermédiaire d'un capteur (TB) de couples de rotation, l'arbre primaire (I) de la transmission à enlacement et au moins une pompe (2) à fluide sous pression, et dans lequel chaque paire de disques coniques présente un vérin de réglage (PI, PII) qui est sollicité et soulagé alternativement par une valve (MR) régulatrice de pression principale, par l'intermédiaire d'une valve (RC) de commande de démultiplication, en fonction de la position d'une valve (MA) de sélection manuelle et en fonction d'un couple de rotation exigé et de la vitesse de déplacement, de façon à provoquer une variation de démultiplication, les signaux de commande agissant sur la valve (RC) de commande de démultiplication étant maintenus en attente par une unité de commande électronique (EC), par l'intermédiaire de valves à solénoïdes correspondantes (RCS), et une valve (DP) de commande de différence de pression, une valve (CL) régulatrice de la pression de conduit, une valve (TB) de commande du capteur de couples de rotation, une valve (QD) de régression rapide et deux valves d'étranglement (CI, CII) déterminant le flux de sortie des vérins de réglage, étant prévues pour la transmission à enlacement, caractérisé par le fait que le moteur à combustion interne (E) entraîne une seconde pompe (1) à fluide sous pression, et l'arbre primaire (I) par l'intermédiaire d'un convertisseur hydrocinétique (CV) de couples de rotation, et la pompe (1) est reliée à la valve (MR) régulatrice de pression principale, par l'intermédiaire d'une valve (PL) limitatrice de courant et d'une valve de dérivation (BY), et alimente le convertisseur (CV) de couples de rotation par l'intermédiaire d'une valve (CR) de soulagement du convertisseur de couples de rotation; système dans lequel la valve (RC) de commande de démultiplication est activée par une pression ($P_{RC}$) de commande de démultiplication, par une valve à solénoïde (RCS) à pression de commande de démultiplication qui, en service normal, met à disposition des pressions de commande comprises entre 2 et 4 bar pour la régulation de démultiplication, et une pression de commande de 6 bar pour le réglage à l'arrêt; et dans lequel, lors d'une défaillance de l'unité de commande électronique (EC) et lorsque la vitesse angulaire du moteur à combustion interne chute en deçà de 1200 tours par minute, la valve (CR) de soulagement du convertisseur de couples de rotation entre en action en tant que première valve de déclenchement d'urgence et, par l'intermédiaire d'une autre valve (LH) de déclenchement d'urgence, transmet la pression de sortie ($P_{CDC}$) du convertisseur de couples de rotation à la valve (RC) de commande de démultiplication, en tant que pression ($P_{LH}$) de commande d'urgence.

2. Système à valves de commande, selon la revendication 1, caractérisé par le fait que la pression ($P_{LH}$) de commande d'urgence, engendrée par la valve (CR) de soulagement du convertisseur de couples de rotation, remplissant la fonction d'une première valve de déclenchement d'urgence, agit sur une valve (RI) de blocage de marche arrière et, de la sorte, empêche un enclenchement de la marche arrière lors d'une vitesse angulaire du moteur excédant 1200 tr/min, correspondant à une vitesse de déplacement excédant 15 km/h; provoque un effet de maintien automatique par rétrocouplage, lorsque la marche arrière est déjà enclenchée; et, lors d'un ralenti à froid excessif, autorise un enclenchement de la marche arrière à l'arrêt, également en présence d'une vitesse angulaire supérieure du moteur, par entrée en action de la pression ($P_{RC}$) de commande de démultiplication.

3. Système à valves de commande, selon les revendications 1 et 2, caractérisé par le fait que, lorsque la valve (MA) de sélection manuelle occupe les positions P, R et N, une valve (RCI) de blocage de démultiplication fait agir la pression de sortie ($P_{CDC}$) du convertisseur de couples de rotation sur la valve (RC) de commande de démultiplication, de sorte que cette dernière surrégule la pression ($P_{RC}$) de commande de démultiplication, et maintient fermement la transmission à la démultiplication la plus faible.

EP 0 229 900 B1